# EUROPÄISCHE PATENTSCHRIFT

(11) **EP 3 303 863 B1**
(45) Veröffentlichungstag und Bekanntmachung des Hinweises auf die Patenterteilung: **12.06.2019**
(21) Anmeldenummer: 16726271.6
(22) Anmeldetag: 29.04.2016
(51) Int. Cl.: F16D 13/00, F16D 13/75

(54) **REIBUNGSKUPPLUNG UND VERFAHREN ZUR EINSTELLUNG DES BETRIEBSPUNKTES DER REIBUNGSKUPPLUNG**
FRICTION CLUTCH AND METHOD FOR ADJUSTING THE OPERATING POINT OF THE FRICTION CLUTCH
EMBRAYAGE À FRICTION ET PROCÉDÉ PERMETTANT D'AJUSTER LE POINT DE FONCTIONNEMENT DE L'EMBRAYAGE À FRICTION

(30) Priorität: 01.06.2015 DE 102015210020
(43) Veröffentlichungstag der Anmeldung: 11.04.2018
(73) Patentinhaber: Schaeffler Technologies AG & Co. KG, 91074 Herzogenaurach (DE)
(72) Erfinder: KERN, Andreas, 77815 Bühl (DE); WITTMANN, Christoph, 77815 Bühl (DE); RUDOLPHI, Norbert, 77876 Kappelrodeck (DE)
(86) Internationale Anmeldenummer: PCT/DE2016/200200
(87) Internationale Veröffentlichungsnummer: WO 2016/192720

(56) Entgegenhaltungen:
- DE-A1-102011 086 967
- DE-A1-102011 086 994
- DE-A1-102011 087 386
- DE-A1-102011 104 410

## Beschreibung

Die Erfindung betrifft eine Reibungskupplung zum Kuppeln einer Antriebswelle eines Kraftfahrzeugmotors mit mindestens einer Getriebeeingangwelle eines Kraftfahrzeuggetriebes und ein Verfahren zur Einstellung des Betriebspunktes der Reibungskupplung.

Aktuell werden Kupplungen, in Abhängigkeit der am Zusammenbau auftretenden Einzelteiltoleranzen, gezielt auf einen Betriebspunkt eingestellt. Bei einer Kupplung mit einer Verschleißnachstelleinrichtung nach dem Prinzip der "TAC-Spindel" wird über die axiale Höhe des, vorzugsweise als Madenschraube ausgebildeten, Abstandsbolzen der mögliche Relativweg zwischen einer deckelseitigen Antriebsklinke und der Anpressplatte, genauer gesagt der Anlagefläche am Verstellring, eingestellt, damit der Betriebspunkt der Kupplung konstant gehalten werden kann und die Toleranzen, die beim Zusammenbau auftreten, ausgeglichen werden können. Bereits aufgrund der von Kupplung zu Kupplung unterschiedlichen Toleranzen beim Zusammenbau scheidet ein drehwinkelgesteuertes Einschrauben der Modenschraube aus, so dass zur Automatisierung der Betriebspunkteinstellung nur das drehmomentgesteuerte Einschrauben geeignet ist. Bekannt ist in die Antriebsklinke eine ein Innengewinde aufweisende Einniethülse eingenietet. Zur Einstellung des Betriebspunktes der Kupplung wird die Madenschraube in der Einniethülse verschraubt. Um den eingestellten Betriebspunkt konstant zu halten, weist die Madenschraube auf ihrem Außengewinde eine Kunststoffschicht auf, die als Schraubensicherung dient und ein Herausdrehen der Schraube verhindert.

Eine gattungsbildende Reibungskupplung mit einer Nachstelleinrichtung ist beispielsweise aus DE 10 2011 087 386 A1 bekannt.

Bedingt durch Streuungen der Gewindetoleranzen aus Einstellschraube und -mutter kann die Schichtdicke der Kunststoffschicht nicht bedarfsgerecht aufgebracht werden.

Beispielsweise kann durch das Einnieten der Einniethülse sich das Innengewinde verformen. Dies führt zwangsläufig zu starken Schwankungen der Ein- und Ausdrehkräfte. Demzufolge kann das Drehmoment so stark ansteigen, dass das Einschrauben der Madenschraube abgebrochen wird, noch bevor die Madenschraube mit der tellerfederseitigen Anlagefläche des Verstellrings in Anlage kommt, d.h. der Betriebspunkt wird nicht korrekt eingestellt. Ferner kann eine Erhöhung der Drehmomentgrenze oder die Verformung des Innengewindes der eingenieteten Einniethülse dazu führen, dass sich die Nietverbindung zwischen Einniethülse und Antriebsklinke lockert, wodurch die Einniethülse beim Einschrauben mitdreht.

Es besteht ein ständiges Bedürfnis die Einstellung des Betriebspunktes der Reibungskupplung durch eine einfache und zuverlässige Lösung zu erreichen.

Es ist die Aufgabe der Erfindung eine Reibungskupplung und ein Verfahren zu schaffen, die ermöglichen, die Einstellung des Betriebspunktes der Reibungskupplung durch eine einfache und zuverlässige Lösung zu erreichen.

Die Lösung der Aufgabe erfolgt erfindungsgemäß durch eine Reibungskupplung mit den Merkmalen des Anspruchs 1 und ein Verfahren mit den Merkmalen des Anspruchs 8. Bevorzugte Ausgestaltungen der Erfindung sind in den Unteransprüchen und der nachfolgenden Beschreibung angegeben, die jeweils einzeln oder in Kombination einen Aspekt der Erfindung darstellen können.

Erfindungsgemäß ist eine Reibungskupplung zum Kuppeln einer Antriebswelle eines Kraftfahrzeugmotors mit mindestens einer Getriebeeingangwelle eines Kraftfahrzeuggetriebes vorgesehen mit einer Gegenplatte, einer relativ zur Gegenplatte axial verlagerbaren Anpressplatte zum reibschlüssigen Verpressen einer Kupplungsscheibe zwischen der Gegenplatte und der Anpressplatte, eine Nachstelleinrichtung zum Nachstellen eines verschleißbedingten Fehlabstands der Anpressplatte zur Gegenplatte, wobei die Nachstelleinrichtung eine Antriebsfeder zum Ermitteln des verschleißbedingten Fehlabstands der Anpressplatte zur Gegenplatte aufweist, einem Einstellelement zur Einstellung des Betriebspunktes der Reibungskupplung und einer Sicherung zur Konstanthaltung des von dem Einstellelement eingestellten Betriebspunktes der Reibungskupplung, wobei die Sicherung durch eine Verformung des Einstellelements selber erfolgt.

Wie oben erwähnt sind Einstellschrauben zur Einstellung eines Betriebspunktes der Reibungskupplung bekannt. Die bekannte Einstellschraube ist in der Regel mit einer Kunststoffschicht zum Verhindern eines Herausdrehens der Einstellschraube versehen. Im Gegensatz dazu ermöglicht die Erfindung, auf die Kunststoffbeschichtung eines Einstellelementes zu verzichten. Eine Sicherung zur Konstanthaltung des von dem Einstellelement eingestellten Betriebspunktes der Reibungskupplung erfolgt durch eine Verformung des Einstellelements selber. Demzufolge kann ein zusätzliches Sicherungselement, wie z.B. die Kunststoffbeschichtung eingespart werden und die von der Kunststoffbeschichtung verursachten Hindernisse vermieden werden, wodurch es ermöglicht, die Einstellung des Betriebspunktes der Reibungskupplung durch eine einfache und zuverlässige Lösung zu erreichen.

Insbesondere kann das Einstellelement als Einstellschraube ausgebildet sein, die mit einem Gewinde versehen ist, wobei die Einstellung des Betriebspunktes durch ein Verschrauben der Einstellschraube erfolgt. Die Einstellschraube kann in einem Bauteil, wie z.B. in dem Kupplungsdeckel oder einer Antriebsfeder eingeschraubt werden. Durch das Verschrauben der Einstellschraube kann die Einstellschraube in Ihrer Axialrichtung bewegt werden. Demzufolge kann eine Stirnseite an einer Anlagefläche der Anpressplatte anliegen. Beispielsweise kann die Stirnseite der Einstellschraube direkt an der Anpressplatte oder an einem Verstellring anliegen, der auf der Anpressplatte angeordnet ist. Der Betriebspunkt kann durch die axiale Bewegung der Einstellschraube eingestellt werden.

Vorteilhaft kann die Sicherung zur Konstanthaltung des eingestellten Betriebspunktes der Kupplung durch eine teilweise Verformung des Gewindes der Einstellschraube erfolgen. Beispielsweise kann das Gewinde der Einstellschraube nach der korrekten Einstellung des Betriebspunktes teilweise zerstört werden. Vorzugsweise kann das Gewinde der Einstellschraube im Verzahnungsbereich mit dem Bauteil oder kurz davor und/oder kurz dahinter, zerstört, wodurch ein Herausdrehen und/oder weiteres Hereindrehen der Einstellschraube verhindert werden kann. Die Zerstörung kann beispielsweise mittels eines Laserstrahls erfolgen.

Insbesondere kann das Einstellelement in der Nachstelleinrichtung integriert sein und mit der Nachstelleinrichtung zusammenarbeiten. Die Nachstelleinrichtung kann einen in Umfangsrichtung verdrehbaren Rampenring aufweisen, der mit mehreren in Axialrichtung abstehenden Rampen versehen ist. Der Rampenring kann zwischen der Tellerfeder und der Anpressplatte angeordnet sein. Zum Verdrehen des Rampenrings relativ zur Anpressplatte kann die Nachstelleinrichtung mit einer an dem Rampenring eingreifenden Verstelleinheit versehen. Diese Verstelleinheit kann beispielsweise ein Spindelsystem und eine Antriebsfeder zum Verdrehen des Spindelsystems auf, wobei das Spindelsystem an der Anpressplatte angeordnet ist und die Antriebsfeder mit Hilfe von einem Befestigungselement an dem Kupplungsdeckel befestigt ist.

Vorteilhaft kann das Einstellelement an der Antriebsfeder der Nachstelleinrichtung angeordnet sein. Beispielsweise kann die als Einstellelement ausgestaltete Einstellschraube in der Antriebsfeder eingeschraubt werden.

Insbesondere kann die Antriebsfeder der Nachstelleinrichtung ein Aufnahmeelement zur Wechselwirkung mit dem Einstellelement aufweisen. Zur Wechselwirkung mit einer Einstellschraube, die mit Gewinde versehen ist, kann das Aufnahmeelement ein entsprechendes Innengewinde aufweisen, wodurch kann die Einstellschraube in dem Aufnahmeelement eingeschraubt werden kann.

Vorzugsweise kann das Aufnahmeelement als Nietmutter ausgebildet sein, die ein Innengewinde aufweist. Die Nietmutter kann in der Antriebsfeder fest vernietet werden. Zum Eingreifen des Gewindes der Einstellschraube kann die Nietmutter ein dem Gewinde der Einstellschraube entsprechendes Innengewinde aufweisen. Durch die Verzahnung des Innengewindes der Nietmutter mit dem Gewinde der Einstellschraube kann die Einstellschraube in der Nietmutter verschraubt werden.

Die Erfindung betrifft ferner ein Verfahren zur Einstellung eines Betriebspunktes der erfindungsgemäßen Reibungskupplung, bei dem ein Einstellelement zur Einstellung des Betriebspunktes der Reibungskupplung eingestellt wird und nach der Einstellung das Einstellelement zur Konstanthaltung des eingestellten Betriebspunktes der Reibungskupplung verformt wird.

Beispielsweise kann das Einstellelement mithilfe von Laserstrahlen verformt werden. Es ist auch möglich, dass das Einstellelement durch andere Methode verformt werden kann. Die Verformung kann beispielsweise durch eine teilweise Zerstörung des Einstellelementes erfolgen.

Vorzugsweise kann das Einstellelement als Einstellschraube ausgebildet sein, die mit einem Gewinde versehen ist, wobei die Einstellung des Betriebspunktes durch ein Verschrauben der Einstellschraube erfolgt und wobei nach der Einstellung das Gewinde der Einstellschraube zur Konstanthaltung des eingestellten Betriebspunktes der Reibungskupplung teilweise verformt wird. Beispielsweise kann das Gewinde der Einstellschraube nach der korrekten Einstellung des Betriebspunktes teilweise zerstört werden. Vorzugsweise kann das Gewinde der Einstellschraube im Verzahnungsbereich mit dem Bauteil oder kurz davor und/oder kurz dahinter, zerstört, wodurch ein Herausdrehen und/oder weiteres Hereindrehen der Einstellschraube verhindert werden kann.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
- Fig. 1:: eine schematische Schnittansicht einer Reibungskupplung gemäß einem Ausführungsbeispiel der Erfindung,
- Fig. 2:: eine perspektivische Ansicht einer ein Einstellelement aufweisenden Nachstelleinrichtung der Reibungskupplung,
- Fig. 3:: eine Explosionsdarstellung des ersten Teils der Nachstelleinrichtung aus Fig. 2,
- Fig. 4:: eine Explosionsdarstellung des zweiten Teils der Nachstelleinrichtung aus Fig. 2,
- Fig. 5:: eine perspektivische Ansicht des an einer Antriebsfeder angeordneten Einstellelements der Nachstelleinrichtung aus Fig. 2 und
- Fig. 6:: einen Schnitt entlang der Linie VI-VI der Fig. 2.

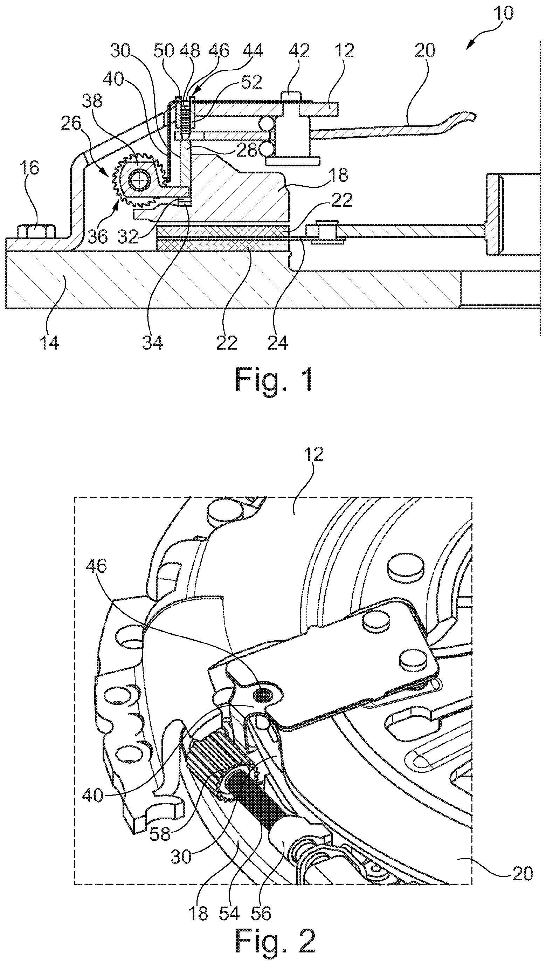

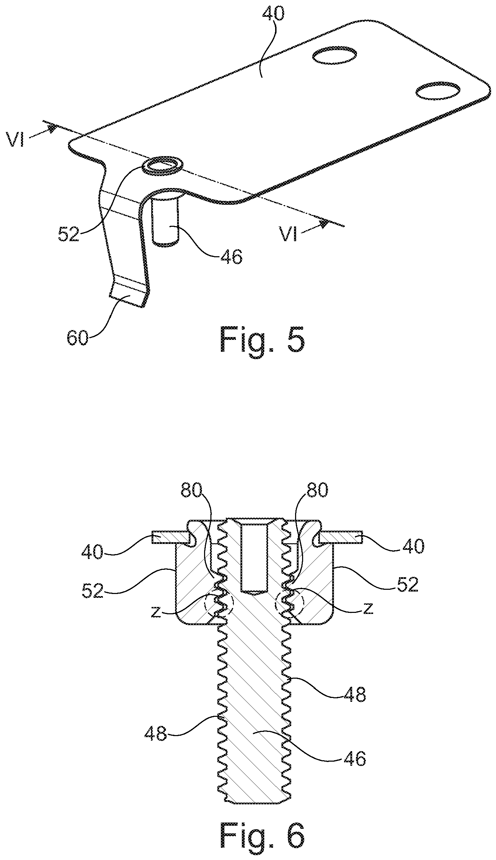

Fig. 1 zeigt eine schematische Schnittansicht einer Reibungskupplung 10 gemäß einem Ausführungsbeispiel der Erfindung. Die Reibungskupplung 10 weist einen Kupplungsdeckel 12 und eine Gegenplatte 14 auf, wobei der Kupplungsdeckel 12 an der Gegenplatte 14 befestigt ist. In diesem Ausführungsbeispiel ist der Kupplungsdeckel 12 mit Hilfe von Schrauben 16 an der Gegenplatte 14 festgeschraubt. Wie in Fig. 1 gezeigt, ist eine Anpressplatte 18 zwischen dem Kupplungsdeckel 12 und der Gegenplatte 14 angeordnet. Die Anpressplatte 18 kann mit Hilfe von einer Tellerfeder 20 auf die Gegenplatte 14 bewegt werden, um eine mit Reibbelägen 22 versehene Kupplungsscheibe 24 zwischen der Anpressplatte 18 und der Gegenplatte 14 zum Schließen der Reibungskupplung 10 zu verpressen. Zum Nachstellen eines verschleißbedingten Fehlabstands der Anpressplatte 18 zu der Gegenplatte 14 ist die Reibungskupplung 10 mit einer Nachstelleinrichtung 26 versehen, die zwischen dem Kupplungsdeckel 12 und der Anpressplatte 18 angeordnet ist. Die Nachstelleinrichtung 26 weist einen in Umfangsrichtung verdrehbaren Verstellring 28 auf. In diesem Ausführungsbeispiel ist der Verstellring 28 als Rampenring 30 ausgebildet, der mit mehreren in Axialrichtung abstehenden Rampen 32 versehen ist. Wie in Fig. 1 gezeigt ist der Rampenring 30 zwischen der Tellerfeder 20 und der Anpressplatte 18 angeordnet. Die Anpressplatte 18 weist mehrere in axialer Richtung abstehende Gegenrampen 34 auf. Zum Verdrehen des Rampenrings 30 relativ zur Anpressplatte 18 ist die Nachstelleinrichtung 26 mit einer an dem Rampenring 30 eingreifenden Verstelleinheit 36 versehen. In diesem Ausführungsbeispiel weist diese Verstelleinheit 36 ein Spindelsystem 38 und eine Antriebsfeder 40 zum Verdrehen des Spindelsystems 38 auf, wobei das Spindelsystem 38 an der Anpressplatte 18 angeordnet ist und die Antriebsfeder 40 mit Hilfe von einem Befestigungselement 42 an dem Kupplungsdeckel 12 befestigt ist. Zur Einstellung des Betriebspunktes der Reibungskupplung 10 ist ein Einstellelement 44 vorgesehen. In diesem Ausführungsbeispiel ist das Einstellelement 44 als Einstellschraube 46 ausgebildet, wobei die Einstellschraube 46 mit einem Gewinde 48 versehen ist. Die Einstellschraube 46 ist in einem Aufnahmeelement 50 schraubbar angeordnet. In diesem Ausführungsbeispiel ist das Aufnahmeelement 50 als Nietmutter 52 ausgestaltet. Wie in Fig. 1 gezeigt ist die Nietmutter 52 in der Antriebsfeder 40 fest vernietet. Durch das Verschrauben der Einstellschraube 46 kann die Einstellschraube 46 in Axialrichtung der Reibungskupplung 10 bewegt werden. Wie in Fig. 1 gezeigt wird die Einstellschraube 46 zur Einstellung des Betriebspunktes der Reibungskupplung 10 so geschraubt, dass sie bei einer geöffneten Situation der neuen (also unverschlissenen) Reibungskupplung 10 an dem Rampenring 30 anliegt, wobei jedoch keine Druckkraft zwischen der Einstellschraube 46 und dem Rampenring 30 bewirkt. Zum Verhindern von Herausdrehen der Einstellschraube 46 wird das Gewinde 48 der Einstellschraube 46 nach der Einstellung des Betriebspunktes der Reibungskupplung 10 teilweise zerstört. Die Zerstörung des Gewindes 48 der Einstellschraube 46 wird anhand von Fig. 6 noch näher erläutert.

Fig. 2 zeigt eine perspektivische Ansicht einer ein Einstellelement 44 aufweisenden Nachstelleinrichtung 26 der Reibungskupplung 10. Die Nachstelleinrichtung 26 weist einen in Umfangsrichtung verdrehbaren Verstellring 28 auf. In diesem Ausführungsbeispiel ist der Verstellring 28 als Rampenring 30 ausgebildet, der mit mehreren in Axialrichtung abstehenden Rampen 32 versehen ist. Wie in Fig. 2 gezeigt ist der Rampenring 30 zwischen der Tellerfeder 20 und der Anpressplatte 18 angeordnet. Zum Verdrehen des Rampenrings 30 relativ zur Anpressplatte 18 ist die Nachstelleinrichtung 26 mit einer an dem Rampenring 30 eingreifenden Verstelleinheit 36 versehen. In diesem Ausführungsbeispiel weist diese Verstelleinheit 36 ein Spindelsystem 38 und eine Antriebsfeder 40 zum Verdrehen des Spindelsystems 38 auf, wobei das Spindelsystem 38 an der Anpressplatte 18 angeordnet ist und die Antriebsfeder 40 mit Hilfe von einem Befestigungselement 42 an dem Kupplungsdeckel 12 befestigt ist. Das Spindelsystem 38 weist eine Spindel 54, eine auf die Spindel 54 aufgeschraubte Spindelmutter 56 zum Verdrehen des Rampenrings 30 und ein drehfest mit der Spindel 54 verbundenes Ritzel 58 auf. Durch eine Drehung der Spindel 54 kann die auf der Spindel 54 aufgeschraubte Spindelmutter 56 entlang der Spindel 54 bewegt werden. Die Spindelmutter 56 ist mit dem Rampenring 30 formschlüssig verbunden, um durch die Bewegung der Spindelmutter 56 den Rampenring 30 relativ zur Anpressplatte 18 zu verdrehen. Zum Eingreifen des Ritzels 58 des Spindelsystems 38 weist die Antriebsfeder 40 eine Antriebsklinke 60 auf. Beim Verschleiß der Reibungskupplung 10 wird die Anpressplatte 18 zum reibschlüssigen Verpressen der Kupplungsscheibe 24 tiefer nach unten zu der Gegenplatte 14 gedrückt. Dabei gleitet während der Bewegung der Anpressplatte 18 zu einer Gegenplatte 14 die Antriebsklinke 60 auf Zähnen 62 des Ritzels 58 und rastet bei dem vorgegebenen Verschleiß in eine Zahnlücke 64 zwischen zwei Zähnen 62 ein. Die Antriebsklinke 60 nimmt beim nächsten Öffnungsvorgang der Reibungskupplung 10 das Ritzel 58 formschlüssig mit und verdreht dabei das Ritzel 58 und damit die Spindel 54, wodurch die Spindelmutter 56 entlang der Spindel 54 bewegt wird und den Rampenring 30 um einen entsprechenden Winkelbetrag verdreht, um die Reibungskupplung 10 dadurch nachzustellen. Die Ausgangsposition der Antriebsklinke 60 der Antriebsfeder 40 kann durch das Verschrauben der Einstellschraube 46 bei der Einstellung des Betriebspunktes der Reibungskupplung 10 eingestellt werden. Die Einstellschraube 46 wird zur Einstellung des Betriebspunktes der Reibungskupplung 10 so geschraubt, dass sie bei einer geöffneten Situation der neuen (also unverschlissenen) Reibungskupplung 10 an dem Rampenring 30 anliegt, wobei jedoch keine Druckkraft zwischen der Einstellschraube 46 und dem Rampenring 30 bewirkt. Zum Verhindern von Herausdrehen der Einstellschraube 46 wird das Gewinde 48 der Einstellschraube 46 nach der Einstellung des Betriebspunktes der Reibungskupplung 10 teilweise zerstört. Die Zerstörung des Gewindes 48 der Einstellschraube 46 wird anhand von Fig. 6 noch näher erläutert.

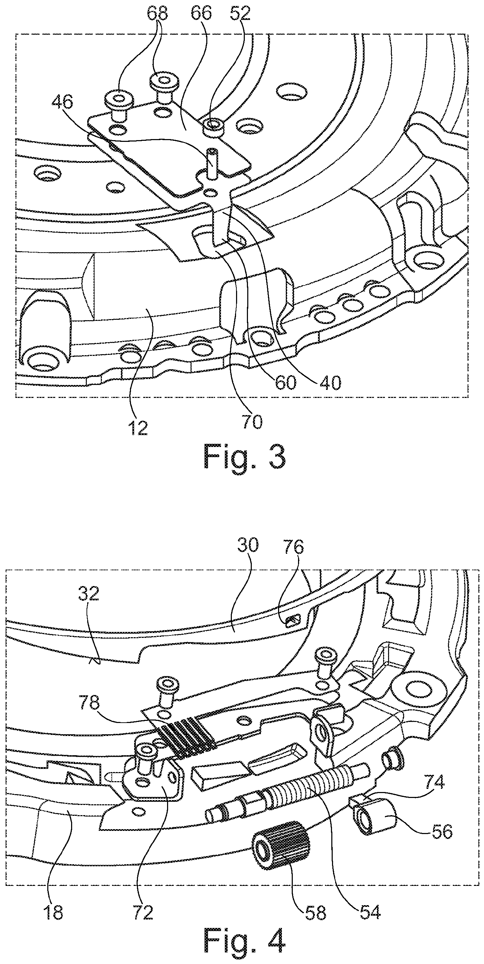

Fig. 3 zeigt eine Explosionsdarstellung des ersten Teils der Nachstelleinrichtung 26. Bei Montage der Reibungskupplung 10 wird die Antriebsfeder 40 auf einer Außenseite des Kupplungsdeckels 12 angeordnet. Zur Verstärkung der Steifigkeit der Antriebsfeder 40 wird eine Verstärkungsplatte 66 zusammen mit der Antriebsfeder 40 an dem Kupplungsdeckel 12 befestigt. In diesem Ausführungsbeispiel wird der Antriebsfeder 40 mit der Verstärkungsplatte 66 durch zwei Niete 68 an dem Kupplungsdeckel 12 vernietet. Die Antriebsklinke 60 wird durch eine Aussparung 70 des Kupplungsdeckels 12 in das Kupplungsdeckel 12 eingesteckt. Die Einstellschraube 46 wird in der Nietmutter 52 eingesetzt, wobei die Nietmutter 52 in der Antriebsfeder 40 fest vernietet wird. Zum Anliegen auf dem Rampenring 30 kann die Einstellschraube 46 durch die Aussparung 70 in die Kupplungsdeckel 12 eingesteckt werden.

Fig. 4 zeigt eine Explosionsdarstellung des zweiten Teils der Nachstelleinrichtung 26. Bei Montage der Reibungskupplung 10 wird das Ritzel 58 drehfest auf der Spindel 54 befestigt und die Spindelmutter 56 wird auf der Spindel 54 aufgeschraubt. Danach wird die Spindel 54 mit dem Ritzel 58 und der Spindelmutter 56 zusammen durch einen Befestigungshalter 72 an der Anpressplatte 18 befestigt. Die Spindelmutter 56 ist mit einem Vorsprung 74 zur Verbindung mit dem Rampenring 30 versehen. Der Vorsprung 74 wird in eine Aufnahmeaussparung76 des Rampenrings 30 eingesteckt. In dieser Explosionsdarstellung ist ferner zu erkennen, dass eine in den Umfang des Ritzels 58 eingreifende Sperrklinke 78 vorgesehen ist, die eine unbeabsichtigte Rückdrehung des Ritzels 58 sperrt. Die Sperrklinke 78 wird auf der Anpressplatte 18 befestigt.

Fig. 5 zeigt eine perspektivische Ansicht der an der Antriebsfeder 40 angeordneten Einstellschraube 46 der Nachstelleinrichtung 26. Die Einstellschraube 46 ist in einem Aufnahmeelement 50 schraubbar angeordnet. In diesem Ausführungsbeispiel ist das Aufnahmeelement 50 als Nietmutter 52 ausgestaltet. Wie in Fig. 5 gezeigt ist die Nietmutter 52 in der Antriebsfeder 40 fest vernietet. Durch das Verschrauben der Einstellschraube 46 kann die Einstellschraube 46 in ihrer Axialrichtung bewegt werden. Wie in Fig. 5 gezeigt ist die Einstellschraube 46 als Madenschraube ausgebildet.

Fig. 6 zeigt eine aufgeschnittene Einstellschraube 46 in der Nietmutter 52. Wie aus Fig. 6 ersichtlich ist, wird die Nietmutter 52 in der Antriebsfeder 40 fest vernietet. Zum Eingreifen des Gewindes 48 der Einstellschraube 46 weist die Nietmutter 52 ein Innengewinde 80 auf. Durch die Verzahnung des Innengewindes 80 der Nietmutter 52 mit dem Gewinde 48 der Einstellschraube 46 ist die Einstellschraube 46 in der Nietmutter 52 schraubbar angeordnet. Durch das Verschrauben der Einstellschraube 46 kann die Einstellschraube 46 in ihrer Axialrichtung bewegt werden. Zum Verhindern von Herausdrehen der Einstellschraube 46 wird das Gewinde 48 der Einstellschraube 46 nach der Einstellung des Betriebspunktes der Reibungskupplung 10 teilweise zerstört. Beispielsweise kann das Gewinde 48 der Einstellschraube 46 in den Bereichen Z zerstört werden. Die Zerstörung kann beispielsweise mittels eines Laserstrahls erfolgen. Es ist auch möglich, das Innengewinde 80 der Nietmutter 52 zum Verhindern von Herausdrehen der Einstellschraube 46 teilweise zu zerstören.
- 72: Befestigungshalter
- 74: Vorsprung
- 76: Aufnahmeaussparung des Rampenrings
- 78: Sperrklinke
- 80: Innengewinde der Nietmutter
- Z: Bereich mit zerstörtem Gewinde

## Patentansprüche

1. Reibungskupplung zum Kuppeln einer Antriebswelle eines Kraftfahrzeugmotors mit mindestens einer Getriebeeingangwelle eines Kraftfahrzeuggetriebes mit einer Gegenplatte (14),
einer relativ zur Gegenplatte (14) axial verlagerbaren Anpressplatte (18) zum reibschlüssigen Verpressen einer Kupplungsscheibe (24) zwischen der Gegenplatte (14) und der Anpressplatte (18),
einer Nachstelleinrichtung (26) zum Nachstellen eines verschleißbedingten Fehlabstands der Anpressplatte (18) zur Gegenplatte (14),
wobei die Nachstelleinrichtung (26) eine Antriebsfeder (40) zum Ermitteln des verschleißbedingten Fehlabstands der Anpressplatte (18) zur Gegenplatte (14) aufweist,
**dadurch gekennzeichnet, dass**
ein Einstellelement (44) zur Einstellung des Betriebspunktes der Reibungskupplung (10) und
eine Sicherung zur Konstanthaltung des von dem Einstellelement (44) eingestellten Betriebspunktes der Reibungskupplung (10) vorgesehen sind,
wobei die Sicherung durch eine Verformung des Einstellelements (44) selber erfolgt.

2. Reibungskupplung nach Anspruch 1, **dadurch gekennzeichnet, dass** das Einstellelement (44) als Einstellschraube (46) ausgebildet ist, die mit einem Gewinde (48) versehen ist, wobei die Einstellung des Betriebspunktes durch ein Verschrauben der Einstellschraube (46) erfolgt.

3. Reibungskupplung nach Anspruch 2, **dadurch gekennzeichnet, dass** die Sicherung zur Konstanthaltung des eingestellten Betriebspunktes der Reibungskupplung (10) durch eine teilweise Verformung des Gewindes (48) der Einstellschraube (46) erfolgt.

4. Reibungskupplung nach einem der Ansprüche 1 bis 3, **dadurch gekennzeichnet, dass** das Einstellelement (44) in der Nachstelleinrichtung (26) integriert ist und mit der Nachstelleinrichtung (26) zusammenarbeitet.

5. Reibungskupplung nach einem der Ansprüche 1 bis 4, **dadurch gekennzeichnet, dass** das Einstellelement (44) an der Antriebsfeder (40) der Nachstelleinrichtung (26) angeordnet ist.

6. Reibungskupplung nach einem der Ansprüche 1 bis 5, **dadurch gekennzeichnet, dass** die Antriebsfeder (40) der Nachstelleinrichtung (26) ein Aufnahmeelement (50) zur Wechselwirkung mit dem Einstellelement (44) aufweist.

7. Reibungskupplung nach Anspruch 6, **dadurch gekennzeichnet, dass** das Aufnahmeelement (50) als Nietmutter (52) ausgebildet ist, die ein Innengewinde (80) aufweist.

8. Verfahren zur Einstellung eines Betriebspunktes der Reibungskupplung nach einem der Ansprüche 1 bis 7, bei dem
ein Einstellelement (44) zur Einstellung des Betriebspunktes der Reibungskupplung (10) eingestellt wird und
nach der Einstellung das Einstellelement (44) zur Konstanthaltung des eingestellten Betriebspunktes der Reibungskupplung (10) verformt wird.

9. Verfahren nach Anspruch 8, **dadurch gekennzeichnet, dass** das Einstellelement (44) mithilfe von Laserstrahlen verformt wird.

10. Verfahren nach Anspruch 8 oder 9, **dadurch gekennzeichnet, dass** das Einstellelement (44) als Einstellschraube (46) ausgebildet ist, die mit einem Gewinde (48) versehen ist, wobei die Einstellung des Betriebspunktes durch ein Verschrauben der Einstellschraube (46) erfolgt und wobei nach der Einstellung das Gewinde (48) der Einstellschraube (46) zur Konstanthaltung des eingestellten Betriebspunktes der Reibungskupplung (10) teilweise verformt wird.

## Claims

1. Friction clutch for coupling a drive shaft of a motor vehicle engine to at least one transmission input shaft of a motor vehicle transmission having
a counterplate (14),
a pressure plate (18) which can be moved axially relative to the counterplate (14) in order to press a clutch disc (24) in a frictionally locking manner between the counterplate (14) and the pressure plate (18),
an adjusting device (26) for adjusting a wear-induced incorrect spacing of the pressure plate (18) from the counterplate (14),
the adjusting device (26) having a drive spring (40) for determining the wear-induced incorrect spacing of the pressure plate (18) from the counterplate (14),
**characterized in that**
a setting element (44) for setting the operating point of the friction clutch (10) and
a securing means for stabilizing the operating point of the friction clutch (10), which operating point is set by the setting element (44), are provided,
the securing means being brought about by way of a deformation of the setting element (44) itself.

2. Friction clutch according to Claim 1, **characterized in that** the setting element (44) is configured as a setting screw (46) which is provided with a thread (48), the setting of the operating point taking place by way of screwing of the setting screw (46).

3. Friction clutch according to Claim 2, **characterized in that** the securing means for stabilizing the set operating point of the friction clutch (10) is brought about by way of a partial deformation of the thread (48) of the setting screw (46).

4. Friction clutch according to one of Claims 1 to 3, **characterized in that** the setting element (44) is integrated into the adjusting device (26) and acts jointly with the adjusting device (26).

5. Friction clutch according to one of Claims 1 to 4, **characterized in that** the setting element (44) is arranged on the drive spring (40) of the adjusting device (26) .

6. Friction clutch according to one of Claims 1 to 5, **characterized in that** the drive spring (40) of the adjusting device (26) has a receiving element (50) for interacting with the setting element (44).

7. Friction clutch according to Claim 6, **characterized in that** the receiving element (50) is configured as a rivet nut (52) which has an internal thread (80).

8. Method for setting an operating point of the friction clutch according to one of Claims 1 to 7, in the case of which method
a setting element (44) is set in order to set the operating point of the friction clutch (10), and,
after the setting, the setting element (44) is deformed in order to stabilize the set operating point of the friction clutch (10).

9. Method according to Claim 8, **characterized in that** the setting element (44) is deformed with the aid of laser beams.

10. Method according to Claim 8 or 9, **characterized in that** the setting element (44) is configured as a setting screw (46) which is provided with a thread (48), the setting of the operating point taking place by way of screwing of the setting screw (46) and, after the setting, the thread (48) of the setting screw (46) being deformed partially in order to stabilize the set operating point of the friction clutch (10).

## Revendications

1. Embrayage à friction pour le couplage d'un arbre d'entraînement d'un moteur de véhicule automobile avec au moins un arbre primaire de boîte de vitesses d'une boîte de vitesses de véhicule automobile avec un contre-plateau (14),
un plateau de pression (18) déplaçable axialement par rapport au contre-plateau (14) pour le pressage avec friction d'un disque d'embrayage (24) entre le contre-plateau (14) et le plateau de pression (18),
un dispositif de rattrapage (26) pour corriger un écartement incorrect dû à l'usure entre le plateau de pression (18) et le contre-plateau (14),
dans lequel le dispositif de rattrapage (26) présente un ressort d'entraînement (40) pour déterminer l'écartement incorrect dû à l'usure entre le plateau de pression (18) et le contre-plateau (14),
**caractérisé en ce qu'**il est prévu
un élément de réglage (44) pour le réglage du point de fonctionnement de l'embrayage à friction (10) et
un blocage pour le maintien constant du point de fonctionnement de l'embrayage à friction (10) réglé au moyen de l'élément de réglage (44),
dans lequel le blocage est assuré par une déformation de l'élément de réglage lui-même (44).

2. Embrayage à friction selon la revendication 1, **caractérisé en ce que** l'élément de réglage (44) est formé par une vis de réglage (46), qui est munie d'un filet (48), dans lequel on effectue le réglage du point de fonctionnement par un vissage de la vis de réglage (46).

3. Embrayage à friction selon la revendication 2, **caractérisé en ce que** l'on effectue le blocage pour le maintien constant du point de fonctionnement réglé de l'embrayage à friction (10) par une déformation partielle du filet (48) de la vis de réglage (46).

4. Embrayage à friction selon l'une quelconque des revendications 1 à 3, **caractérisé en ce que** l'élément de réglage (44) est intégré dans le dispositif de rattrapage (26) et coopère avec le dispositif de rattrapage (26).

5. Embrayage à friction selon l'une quelconque des revendications 1 à 4, **caractérisé en ce que** l'élément de réglage (44) est disposé sur le ressort d'entraînement (40) du dispositif de rattrapage (26).

6. Embrayage à friction selon l'une quelconque des revendications 1 à 5, **caractérisé en ce que** le ressort d'entraînement (40) du dispositif de rattrapage (26) présente un élément de logement (50) pour l'interaction avec l'élément de réglage (44).

7. Embrayage à friction selon la revendication 6, **caractérisé en ce que** l'élément de logement (50) est formé par un écrou à river (52), qui présente un filet intérieur (80).

8. Procédé de réglage d'un point de fonctionnement de l'embrayage à friction selon l'une quelconque des revendications 1 à 7, dans lequel
on règle un élément de réglage (44) pour le réglage du point de fonctionnement de l'embrayage à friction (10)
et
après le réglage on déforme l'élément de réglage (44) pour le maintien constant du point de fonctionnement réglé de l'embrayage à friction (10).

9. Procédé selon la revendication 8, **caractérisé en ce que** l'on déforme l'élément de réglage (44) à l'aide de faisceaux laser.

10. Procédé selon une revendication 8 ou 9, **caractérisé en ce que** l'élément de réglage (44) est formé par une vis de réglage (46), qui est munie d'un filet (48), dans lequel on effectue le réglage du point de fonctionnement par un vissage de la vis de réglage (46) et dans lequel après le réglage on déforme partiellement le filet (48) de la vis de réglage (46) pour le maintien constant du point de fonctionnement réglé de l'embrayage à friction (10).
